# EUROPÄISCHE PATENTSCHRIFT

(11) **EP 2 984 035 B1**
(45) Veröffentlichungstag und Bekanntmachung des Hinweises auf die Patenterteilung: **30.08.2017**
(21) Anmeldenummer: 14714617.9
(22) Anmeldetag: 19.03.2014
(51) Int. Cl.: C01B 33/035, B01J 4/00

(54) **GASVERTEILER FÜR SIEMENS-REAKTOR**
GAS DISTRIBUTOR FOR A SIEMENS REACTOR
RÉPARTITEUR DE GAZ POUR RÉACTEUR SIEMENS

(30) Priorität: 09.04.2013 DE 102013206236
(43) Veröffentlichungstag der Anmeldung: 17.02.2016
(73) Patentinhaber: Wacker Chemie AG, 81737 München (DE)
(72) Erfinder: POPP, Friedrich, Ooltewah, Tennessee 37363 (US); KUTZA, Christian, 84489 Burghausen (DE); ROECKL, Martin, 83026 Rosenheim (DE); WEISS, Tobias, 84561 Mehring (DE)
(74) Vertreter: Potten, Holger
(86) Internationale Anmeldenummer: PCT/EP2014/055472
(87) Internationale Veröffentlichungsnummer: WO 2014/166711

(56) Entgegenhaltungen:
- WO-A1-94/22568
- DE-A1-102009 035 952
- DE-B3-102009 003 368
- FR-A1- 2 582 540
- US-A- 3 188 173

## Beschreibung

Die Erfindung betrifft einen Gasverteiler für einen Siemens-Reaktor zur Abscheidung von polykristallinem Silicium, insbesondere einen Zugasverteiler und einen Abgassammler.

Hochreines polykristallines Silicium (Polysilicium) dient als Ausgangsmaterial zur Herstellung von einkristallinem Silicium für Halbleiter nach dem Czochralski(CZ)- oder Zonenschmelz(FZ)-Verfahren, sowie zur Herstellung von ein- oder multikristallinem Silicium nach verschiedenen Zieh- und GießVerfahren zur Produktion von Solarzellen für die Photovoltaik.

Polysilicium wird üblicherweise mittels des Siemens-Verfahrens hergestellt. Dabei wird ein Reaktionsgas umfassend eine oder mehrere Silicium enthaltende Komponenten und gegebenenfalls Wasserstoff in einen Reaktor umfassend durch direkten Stromdurchgang erhitzte Trägerkörper eingeleitet, wobei sich an den Trägerkörpern Silicium in fester Form abscheidet. Als Silicium enthaltende Komponenten werden bevorzugt Silan (SiH₄), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt.

Das Siemens-Verfahren wird üblicherweise in einem Abscheidereaktor (auch "Siemens-Reaktor" genannt) durchgeführt. In der gebräuchlichsten Ausführungsform umfasst der Reaktor eine metallische Grundplatte und eine kühlbare Glocke, die auf die Grundplatte gesetzt ist, so dass ein Reaktionsraum im Inneren der Glocke entsteht. Die Grundplatte ist mit einer oder mehreren Gaseinlassöffnungen und einer oder mehreren Abgasöffnungen für die abgehenden Reaktionsgase sowie mit Halterungen versehen, mit deren Hilfe die Trägerkörper im Reaktionsraum gehalten und mit elektrischen Strom versorgt werden.

Jeder Trägerkörper besteht meistens aus zwei dünnen Filamentstäben und einer Brücke, die in der Regel benachbarte Stäbe an ihren freien Enden verbindet. Am häufigsten werden die Filamentstäbe aus ein- oder polykristallinem Silicium gefertigt, seltener kommen Metalle bzw. Legierungen oder Kohlenstoff zum Einsatz. Die Filamentstäbe stecken senkrecht in am Reaktorboden befindlichen Elektroden, über die der Anschluss an die Stromversorgung erfolgt. An den erhitzten Filamentstäben und der waagrechten Brücke scheidet sich hochreines Polysilicium ab, wodurch deren Durchmesser mit der Zeit anwächst. Nachdem der gewünschte Durchmesser erreicht ist, wird der Prozess beendet.

Zur Herstellung von Polysilicium werden standardmäßig Abscheidereaktoren eingesetzt, bei denen im unteren Teil, der sog. Bodenplatte, über Düsen das Reaktionsgas eingedüst wird. Eine Einleitung des Reaktionsgases im oberen Teil des Reaktors mittels Düsen ist allerdings ebenso möglich.
Ebenfalls wird entstehendes Abgas oft über eine oder mehrere Öffnungen im Reaktorboden, aber auch über die Reaktorhaube, aus dem Reaktor abgeführt.

Da eine gleichmäßige Verteilung des Zugases für die gleichmäßige Abscheidung an den Stäben wichtig ist, wird das Gas üblicherweise über mehrere Düsen zugeführt.

Eine solche Verteilung des Zugases kann entweder mittels einer Vielzahl von einzelnen Zugasleitungen jeweils mit direktem Anschluss an die einzelnen Zugasdüsen oder über einen Gasverteiler, z.B. einen ringförmigen oder einen anders gearteten Gasverteiler in Reaktornähe meist unterhalb der Reaktorbodenplatte, mit mehreren Anschlüssen für die einzelnen Zugasdüsen, realisiert werden.

Im Stand der Technik sind einige entsprechende Lösungen bekannt.

US2011/0058988 A1 beschreibt einen Reaktor zur Herstellung von polykristallinem Silizium, mit einem Reaktorboden, der eine Vielzahl von Düsen mit jeweils einer Düseneintrittsöffnung und jeweils einer Düsenaustrittsöffnung aufweist, die eine Zuführung für ein siliziumhaltiges Gas in den Reaktorinnenraum bilden, dadurch gekennzeichnet , dass eine Wandung derart geformt ist, dass sie zusammen mit einer Außenfläche des Reaktorbodens einen Hohlraum begrenzt, welcher eine Verteilung des siliziumhaltigen Gases auf mindestens einen Teil der Düsen, mit dem er kommuniziert, bildet, wobei die Wandung derart gasdicht am Reaktorboden angebracht ist, dass mindestens eine Kontaktfläche des Hohlraums mit der Außenfläche des Reaktorbodens auf einen echten Teilbereich der Außenfläche des Reaktorbodens beschränkt ist.
US2011/0058988 A1 liegt die Aufgabe zugrunde, einen Reaktor für die Herstellung von polykristallinem Silizium bereitzustellen, dessen Reaktorboden derart ausgestaltet ist, dass die Verteilung des siliziumhaltigen Gases auf die Düsen im Reaktorboden platzsparend, sicher, und kostengünstig erfolgt, und eine leichte Zugänglichkeit zu den weiteren Vorrichtungen auf der Außenseite des Reaktorbodens, z. B. Elektroden oder Kühlmittelanschlüssen, ermöglicht wird.

US2011/0305604 A1 beschreibt einen Reaktor zur Herstellung von polykristallinem Silizium nach dem Monosilan-Prozess, mit einem Reaktorboden, der eine Vielzahl von Düsen ausgebildet hat, durch die ein siliziumhaltiges Gas einströmt, mehreren ebenfalls am Reaktorboden montierten Filamentstäben und einer von den Düsen beabstandeten Gasaustrittöffnung zum Zuführen von verbrauchtem Monosilan zu einer Anreicherung und/oder Aufbereitung, dadurch gekennzeichnet, dass die Gasaustrittöffnung an einem freien Ende eines Innenrohrs ausgebildet ist und dass das Innenrohr durch den Reaktorboden geführt ist und dass das Innenrohr eine äußere Wand und eine innere Wand besitzt und somit einen Zwischenraum ausbildet, in dem mindestens ein Kühlwasserkreislauf geführt ist. US2011/0305604 A1 liegt die Aufgabe zugrunde, einen Reaktor für die Herstellung von polykristallinem Silizium derart auszugestalten, dass die Abführung von verbrauchtem siliziumhaltigem Gas (Monosilan: SiH₄) derart ausgestaltet ist, dass eine sichere Produktion des polykristallinen Siliziums gewährleistet ist.

In einer bevorzugten Ausführungsform sind der Reaktor und der Reaktorboden als Doppelmantel aus einer inneren Wand und einer äußeren Wand ausgebildet, wobei sich das Wasser zur Kühlung im Doppelmantel befindet. Dabei umfasst der Reaktorboden einen ersten Bereich und einen zweiten Bereich, wobei der erste Bereich durch eine dem Innenraum des Reaktors zugewandte Platte einer Zwischenplatte, die die Düsen trägt, gebildet ist und wobei der zweite Bereich durch die Zwischenplatte und eine Bodenplatte, die Versorgungsanschlüsse für die Filamente trägt, gebildet ist.

Der Reaktor weist eine Vielzahl von Düsen für die Zuführung des Reaktionsgases auf. Durch eine Zwischenplatte wird der Reaktorboden in zwei Bereiche unterteilt. Die Düsen sind als zylinderförmige Verbindung zwischen der Zwischenplatte und dem Innenraum des Reaktors ausgebildet. Somit fungiert der Bereich unter der Zwischenplatte als Gasverteiler.

FR2582540A1 beschreibt eine Vorrichtung zum Steuern der Fluidisiergaszufuhr an den Ausblasöffnungen eines Fluidisierungsgitters. Bei der Vorrichtung handelt es sich um eine semipermeable Membran, die als Gasverteiler fungiert und zwischen zwei Teilstücken einer Rohrleitung angeordnet ist, wobei die Teilstücke über Flansche miteinander verbunden sind.

US 4805556 A beschreibt einen Reaktor zur Abscheidung von polykristallinem Silicium durch Pyrolyse eines Silans, wobei vorgesehen ist, Abgas aus dem Reaktor wiederaufzubereiten und zumindest teilweise in den Reaktor zurückzuführen. Zu diesem Zweck ist ein ringförmiges Verteilernetz aus einem Verteilerstück und Vielzahl von Verteilerringen, die mit der Zahl der Filamente korrespondiert, vorgesehen.

In einer bevorzugten Ausführungsform umfasst das Verteilernetz zwei Verteilerstücke, wobei ein erstes Verteilerstück mit einem Rohr für wiederaufbereitetes Abgas verbunden ist und das zweite Verteilerstück mit den Verteilerringen verbunden ist, wobei die beiden Verteilerstücke mittels wenigstens einer Einspeiseleitung verbunden sind. Jeder Verteilerring umfasst eine Vielzahl von Düsenöffnungen, die symmetrisch angeordnet sind. Die Verteilerringe sind jeweils so platziert, dass das wiederaufbereitete Abgas auf eine ein Filament tragende Elektrode gerichtet wird.

Weil die Zu- und Abgase feuchtigkeitsempfindlich sind und es bei einer Vermischung mit Luft bzw. Sauerstoff zu einer Bildung von explosionsfähigen Gasgemischen kommen kann, werden Zu- und Abgasleitungen bzw. -verteiler mit dem Reaktorboden fest verschweißt, vgl. US2011/0058988 A1. Dies schließt ein Entweichen des Reaktionsgases aus und vereinfacht gewisse Wartungsarbeiten (z.B. keine Kontrolle bzw. kein Austausch von Dichtungen notwendig).

Während des Abscheideprozesses kann es zur Rissbildung in den wachsenden Siliciumstäben kommen. Als Folge können Siliciumsplitter verschiedener Größe in die Zu- und Abgasöffnungen hineinfallen und die Gasleitungen bzw. Gasverteiler blockieren.

Im schlimmsten Fall können alle Stäbe zusammenbrechen, wobei sehr große Siliciumstücke in die Ein- und Austrittsöffnungen fallen.

Beim Zugas führt eine solche Blockierung zu einer ungleichmäßigen Verteilung bzw. falscher Dosierung des Zugases und beim Abgas kann es durch Verblockung zu einem unerwünschten Druckanstieg im Reaktor kommen.

Aus diesem Grund müssen die Siliciumstücke spätestens vor der Folgecharge entfernt werden.

Bei einem Gasverteiler, der fest mit dem Reaktorboden verbunden ist, d.h. nur durch z.B. Schneiden vom Reaktorboden trennbar, gibt es in der Praxis nur die Möglichkeit die Siliciumstücke im Chargenwechsel über die Gasöffnungen im Reaktor zu entfernen.

Siliciumstücke lassen sich meist nur unter größerem Aufwand (z.B. händisch oder mit Greifwerkzeug, Staubsauger) entfernen.

Diese Prozedur ist umständlich und langwierig (d.h. höhere Rüstzeiten) und führt auch nicht immer zum Erfolg, da sehr große Stücke manchmal zu sperrig für das Greifwerkzeug sind und mit dem Staubsauger nicht abgesaugt werden können.

Bei einem Gasverteiler bzw. Abgassammler, welcher mit Hilfe von lösbaren Verbindungen (z.B. Flansch) über die Zu- bzw. Abgasableitungen am Reaktor befestigt wird, können zwar die Zu- oder Abgasleitungen abgetrennt werden, der Gasverteiler bzw. Abgassammler an sich, in dem sich die meisten Siliciumstücke befinden, kann aber nicht geöffnet werden. Zusätzliche Verrohrung und elektrische Anschlüsse unterhalb des Reaktorbodens verhindern außerdem einen einfachen Zugang zum Gasverteiler und/oder Abgassammler.

Aus dieser Problematik ergab sich die Aufgabenstellung der Erfindung.

Die Aufgabe wird gelöst durch einen Gasverteiler, in dem Gase transportiert werden können, umfassend wenigstens zwei Segmente, welche mittels lösbarer Befestigungsmittel gasdicht miteinander verbunden sind, wenigstens eine Gaseintrittsöffnung und wenigstens eine Gasaustrittsöffnung, wobei der Gasverteiler mittels lösbarer Befestigungsmittel an einem Reaktors zur Abscheidung von polykristallinem Silicium montierbar ist, wobei die wenigstens eine Gasaustrittsöffnung des Gasverteilers mit einer Gaseintrittsöffnung des Reaktors kommunizierend verbunden ist und/oder wobei die wenigstens eine Gaseintrittsöffnung des Gasverteilers mit einer Gasaustrittsöffnung des Reaktors kommunizierend verbunden ist.

Vorzugsweise handelt es sich beim Gasverteiler um einen Zugasverteiler, der geeignet ist, Eduktgas (Silane) in den Reaktor einzubringen. In diesem Fall ist die wenigstens eine Gaseintrittsöffnung für die Einspeisung von Eduktgas in den Gasverteiler vorgesehen und wird zu diesem Zweck mit einer Eduktgaseinspeiseleitung verbunden. Die wenigstens eine Gasaustrittsöffnung dient in diesem Fall der Zuführung von Eduktgas zu den Reaktordüsen und ist zu diesem Zweck mit einer Gaseintrittsöffnung des Reaktors kommunizierend verbunden. Falls der Reaktor beispielsweise drei Gaseintrittsöffnungen aufweist, beinhaltet der Zugasverteiler ebenfalls drei Gasaustrittsöffnungen, von welchen jede jeweils mit einer der Gaseintrittsöffnungen des Reaktors kommunizierend verbunden ist.

Es besteht allerdings auch die Möglichkeit, dass für eine Vielzahl von Gaseintrittsöffnungen mehrere Zugasverteiler genutzt werden. Ebenso besteht die Möglichkeit die Gaseintrittsöffnungen mit einer beliebigen sinnvollen Anzahl von Zugasverteilern und beliebig sinnvollen Eduktgaseinspeiseleitungen zu kombinieren.

Die Aufgabe wird auch gelöst durch einen Gasverteiler, in dem Gase transportiert werden können, umfassend wenigstens zwei Segmente, welche mittels lösbarer Befestigungsmittel gasdicht miteinander verbunden sind, wenigstens eine Gaseintrittsöffnung und wenigstens eine Gasaustrittsöffnung, wobei der Gasverteiler mittels lösbarer Befestigungsmittel an einem Reaktor zur Abscheidung von polykristallinem Silicium montierbar ist, wobei die wenigstens eine Gaseintrittsöffnung des Gasverteilers für die Einspeisung von Abgas aus dem Reaktor vorgesehen ist und mit wenigstens einer Abgasöffnung des Reaktors verbunden ist, wobei die wenigstens eine Gasaustrittsöffnung des Gasverteilers der Abführung des Abgases aus dem Gasverteiler dient.

In diesem Fall ist die wenigstens eine Gaseintrittsöffnung des Gasverteilers für die Einspeisung von Abgas aus dem Reaktor vorgesehen und ist zu diesem Zweck mit einer Gasaustrittsöffnung (Abgasöffnung) des Reaktors kommunizierend verbunden. Falls der Reaktor beispielsweise drei Abgasöffnungen aufweist, beinhaltet der Abgassammler ebenfalls drei Gaseintrittsöffnungen, die jeweils mit einer der Abgasöffnungen des Reaktors kommunizierend verbunden sind. Die wenigstens eine Gasaustrittsöffnung des Abgassammlers dient der Abführung des Abgases aus dem Abgassammler. Es besteht allerdings auch die Möglichkeit, dass für eine Vielzahl von Abgasöffnungen mehrere Abgassammler genutzt werden. Ebenso besteht die Möglichkeit die Gasaustrittsöffnungen mit einer beliebigen sinnvollen Anzahl von Abgassammlern und einzelnen Abgasleitungen zu kombinieren.

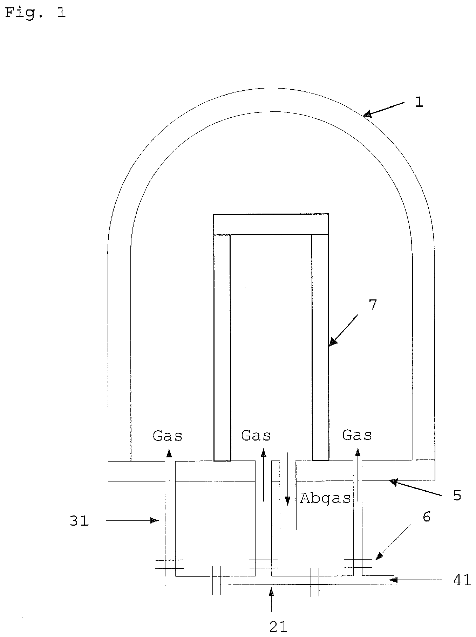

Die Erfindung betrifft auch einen Reaktor zur Abscheidung von polykristallinem Silicium, der wenigstens einen solchen Zugasverteiler und/oder wenigstens einen solchen Abgassammler umfasst (siehe Fig. 1-4).

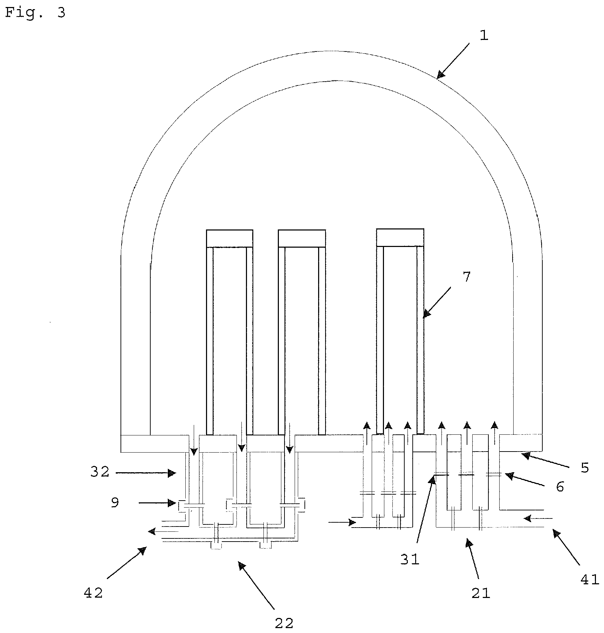

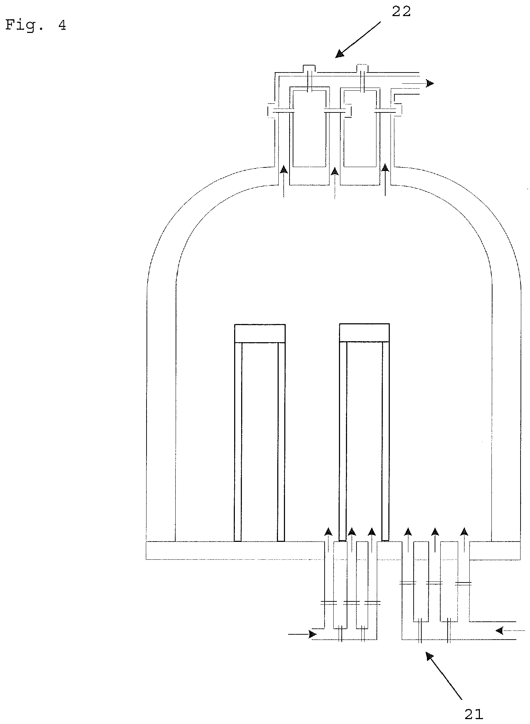

Es ist bevorzugt, in einem Abscheidereaktor mehrere solcher Abgassammler und/oder Zugasverteiler vorzusehen (siehe beispielhaft Fig.3/4).

Vorzugsweise ist der Zugasverteiler bzw. Abgassammler ringförmig. Ringförmige Zugasverteiler bzw. Abgassammler zeigen insbesondere den Vorteil einer platzsparenden Anordnung am Reaktor und bewirken eine gleichmäßige Gasströmung und damit eine gleichmäßige Gasverteilung im Reaktorraum.

Besonders bevorzugt sind Zugasverteiler, die so angeordnet sind, dass die Zuleitungen vom Gasverteiler zu den Düsen für alle Düsen identische Form und Länge besitzen, im Idealfall - falls die Zuleitung von unten über die Bodenplatte in den Reaktor erfolgen soll - sogar senkrecht nach oben verbunden werden können.

Als Zuleitung wird die Verbindung vom Gasverteiler zu den einzelnen Reaktordüsen verstanden.

Ein gleichmäßiges Abführen des Abgases aus dem Reaktor ist für eine gleichmäßige Gasverteilung im Reaktorraum ebenso wichtig. Diese Abführung kann analog zum Zugasverteiler über einen Abgassammler realisiert werden.

Besonders bevorzugt sind Abgassammler, die so angeordnet sind, dass die Abgasableitungen von den Reaktorabgasöffnungen zum Abgassammler identische Form und Länge besitzen.

Als Abgasableitungen wird die Verbindung zwischen Reaktorabgasöffnung und Abgassammler verstanden.

Wesentlich für das Gelingen der Erfindung ist es, dass Gasverteiler und Abgassammler aus zwei oder mehreren Teilstücken zusammengesetzt sind.

Sämtliche Teilstücke sind lediglich mit lösbaren Mitteln (z.B. Flansche) gasdicht miteinander verbunden.

Die teilbaren Segmente werden lediglich mit lösbaren Befestigungsmitteln (z.B. Flansch mit Schrauben, Flansch mit Klemmen, Gewinde, Pressfittinge, etc.) gasdicht miteinander verbunden.

Zusätzlich sollten die Zuleitungen bzw. Abgasableitungen ebenfalls mit lösbaren Mitteln (Flanschen) gasdicht mit dem Reaktor verbunden sein.

Die erfindungsgemäße Vorrichtung ermöglicht das Entfernen der hineingefallenen Si-Stücke durch die vereinfachte Entfernung und Reinigung des Gasverteilers bzw. Abgassammlers.

Weil der Gasverteiler bzw. Abgassammler aus mehreren Segmenten besteht, kann man bei Bedarf auch nur den verunreinigen Teil des Verteilers/Sammlers abmontieren und Reinigen (Einsparung Rüst-Zeit) oder ggf. ersetzen.

Man kann auf ein Herausschleudern der Stücke mit hohem Druck in vielen Fällen verzichten.

Des Weiteren wird die Standzeit der Anlage durch umständliche Arbeitsschritte mit dem Hilfsmitteln (Greifarm, Staubsauger usw.) nicht erhöht.

In dem Fall, dass Bodenplatten für Wartungsarbeiten unter der Anlage nicht gänzlich abmontiert werden müssen (z.B. mit Reaktorgruben unter den Anlagen), kann ein einziges Segment des Gasverteilers/Abgassammlers relativ schnell entfernt und gereinigt werden.

Bei Gasverteilern bzw. Abgassammler, die so angeordnet sind, dass deren Zuleitungen/ Abgasableitungen geometrisch gleich sind und im Idealfall sogar senkrecht nach oben/unten (d.h. ohne Bögen in den Zuleitungen/Abgasableitungen) verrohrt werden können, entsteht zusätzlich eine gleichförmige Gasströmung im Reaktor, die den Abscheideprozess verbessert.

Die Erfindung wird im Folgenden zusätzlich anhand von **Fig. 1****,** **2**, **3** und **4** erläutert.

### Liste der verwendeten Bezugszeichen

- **1**: Reaktorhaube
- **21**: Zugasverteiler
- **22**: Abgassammler
- **31**: Zugasleitung
- **32**: Abgasleitung
- **41**: Eduktgaszuführung
- **42**: Abgasabführung
- **5**: Bodenplatte
- **6**: Flanschverbindung
- **7**: U-förmiger Trägerkörper (Filament)
- **8**: Wasserkühlung (doppelwandig)
- **9**: Wasserbogen

**Fig. 1** zeigt schematisch einen Siemens Reaktor mit einem Zugasverteiler.
**Fig. 2** zeigt einen Siemensreaktor mit einem Abgassammler.
**Fig. 3** zeigt schematisch einen Siemensreaktor mit einem Abgassammler und zwei Zugasverteilern.
**Fig. 4** zeigt schematisch einen Siemensreaktor mit einem Abgassammler am Reaktordeckel und zwei Zugasverteilern am Reaktorboden.

**Fig. 1** zeigt einen Reaktor mit Reaktorhaube **1,** einen U-förmigen Trägerkörper **7** (auf dem Silicium abgeschieden wird) und einen Zugasverteiler **21. 31** zeigt die Zugasleitung. Eduktgas wird über Eduktgaszuführung **41** in den Zugasverteiler **21** geführt. Es sind drei Öffnungen für Eduktgas dargestellt. Entsprechende Öffnungen in der Bodenplatte **5** sind vorhanden. Die einzelnen Elemente des Zugasverteilers sind mittels Flanschverbindungen **6** befestigt und abtrennbar. Abgas wird über eine Öffnung in der Bodenplatte **5** abgeführt.

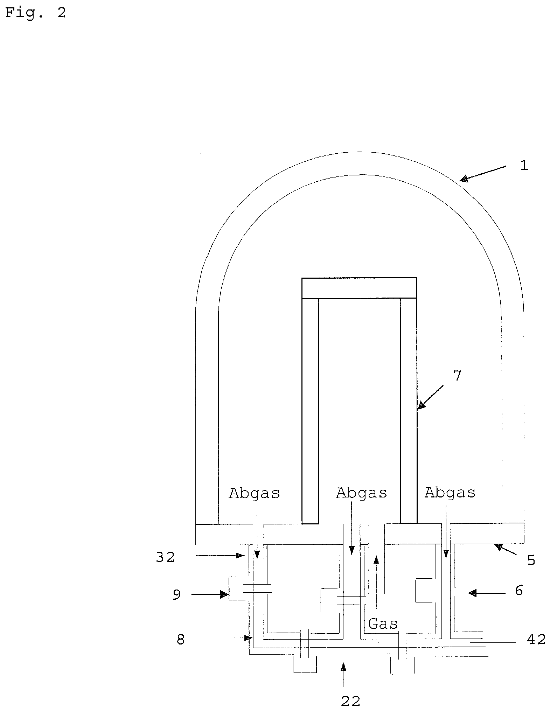

**Fig. 2** zeigt einen Reaktor mit Reaktorhaube **1,** einen U-förmigen Trägerkörper **7** (auf dem Silicium abgeschieden wird) und einen Abgassammler **22. 32** zeigt die Abgasleitung. Abgas aus dem Reaktor wird über drei Öffnungen in der Bodenplatte **5** in Abgasleitungen **32** geführt (Abgassammler weist entsprechende Öffnungen auf) und mittels Abgasabführung **42** aus dem Abgassammler **22** entfernt. Die einzelnen Elemente des Abgassammlers **22** sind mittels Flanschverbindungen **6** befestigt und abtrennbar. Es ist eine Wasserkühlung **8** vorgesehen, mit Wasserbogen **9.**

**Fig. 3** zeigt einen Reaktor mit Reaktorhaube **1,** einen U-förmigen Trägerkörper **7** (auf dem Silicium abgeschieden wird) und zwei Zugasverteiler **21. 31** zeigt die Zugasleitung. Eduktgas wird über Eduktgaszuführung **41** in den Zugasverteiler **21** geführt. Es sind je Zugasverteiler **21** drei Öffnungen für Eduktgas dargestellt. Entsprechende Öffnungen in der Bodenplatte **5** sind vorhanden. Die einzelnen Elemente des Zugasverteilers sind mittels Flanschverbindungen **6** befestigt und abtrennbar. Weiterhin ist ein Abgassammler **22** vorgesehen. **32** zeigt die Abgasleitung. Abgas aus dem Reaktor wird über drei Öffnungen in der Bodenplatte **5** in Abgasleitungen **32** geführt (Abgassammler weist entsprechende Öffnungen auf) und mittels Abgasabführung **42** aus dem Abgassammler **22** entfernt. Die einzelnen Elemente des Abgassammlers **22** sind mittels Flanschverbindungen **6** befestigt und abtrennbar. Es ist eine Wasserkühlung **8** vorgesehen, mit Wasserbogen **9.**

**Fig. 4** zeigt eine Ausführung mit zwei Zugasverteilern **21** und einem Abgassammler **22,** bei der jedoch abweichend von **Fig. 3** der Abgassammler nicht an die Bodenplatte, sondern an den Reaktordeckel geflanscht ist.

## Patentansprüche

1. Gasverteiler, in dem Gase transportiert werden können, umfassend wenigstens zwei Segmente, welche mittels lösbarer Befestigungsmittel gasdicht miteinander verbunden sind, wenigstens eine Gaseintrittsöffnung und wenigstens eine Gasaustrittsöffnung, wobei der Gasverteiler mittels lösbarer Befestigungsmittel an einem Reaktor zur Abscheidung von polykristallinem Silicium montierbar ist, wobei die wenigstens eine Gasaustrittsöffnung des Gasverteilers mit wenigstens einer Gaseintrittsöffnung des Reaktors kommunizierend verbunden ist und/oder wobei die wenigstens eine Gaseintrittsöffnung des Gasverteilers mit wenigstens einer Gaseinspeiseleitung der Medienversorgung des Reaktors kommunizierend verbunden ist.

2. Gasverteiler nach Anspruch 1, der geeignet ist, Gas in den Reaktor einzubringen, wobei die wenigstens eine Gaseintrittsöffnung für die Einspeisung von Gas vorgesehen ist und mit einer Gaseinspeiseleitung verbunden ist, wobei die wenigstens eine Gasaustrittsöffnung der Zuführung von Gas zu Reaktordüsen dient.

3. Gasverteiler nach Anspruch 1 oder nach Anspruch 2, wobei es sich bei den lösbaren Befestigungsmitteln um Flanschverbindungen handelt.

4. Gasverteiler nach einem der Ansprüche 1 bis 3, dessen Zuleitungen vom Gasverteiler zu den Düsen identische Form haben, bevorzugt vertikal verlaufen.

5. Gasverteiler nach einem der Ansprüche 1 bis 4, der ringförmig ist.

6. Gasverteiler, in dem Gase transportiert werden können, umfassend wenigstens zwei Segmente, welche mittels lösbarer Befestigungsmittel gasdicht miteinander verbunden sind, wenigstens eine Gaseintrittsöffnung und wenigstens eine Gasaustrittsöffnung, wobei der Gasverteiler mittels lösbarer Befestigungsmittel an einem Reaktor zur Abscheidung von polykristallinem Silicium montierbar ist, wobei die wenigstens eine Gaseintrittsöffnung des Gasverteilers für die Einspeisung von Abgas aus dem Reaktor vorgesehen ist und mit wenigstens einer Abgasöffnung des Reaktors verbunden ist, wobei die wenigstens eine Gasaustrittsöffnung des Gasverteiler der Abführung des Abgases aus dem Gasverteiler dient.

7. Gasverteiler nach Anspruch 6, wobei es sich bei den lösbaren Befestigungsmitteln um Flanschverbindungen handelt.

8. Gasverteiler nach einem der Ansprüche 6 oder 7, wobei die Verbindungsleitungen vom den Abgasöffnungen des Reaktors zum Gasverteiler identische Form haben.

9. Gasverteiler nach einem der Ansprüche 6 bis 8, der ringförmig ist.

10. Reaktor zur Abscheidung von polykristallinem Silicium, enthaltend wenigstens einen Gasverteiler nach einem der Ansprüche 1 bis 5.

11. Reaktor zur Abscheidung von polykristallinem Silicium, enthaltend wenigstens einen Gasverteiler nach einem der Ansprüche 6 bis 9.

12. Reaktor zur Abscheidung von polykristallinem Silicium, enthaltend wenigstens einen Gasverteiler nach einem der Ansprüche 1 bis 5 sowie wenigstens einen Gasverteiler nach einem der Ansprüche 6 bis 9.

## Claims

1. Gas distributor in which gases can be transported, comprising at least two segments which are gastightly connected to one another by means of detachable fastening means, at least one gas inlet opening and at least one gas outlet opening, wherein the gas distributor can be mounted by means of detachable fastening means to a reactor for deposition of polycrystalline silicon, wherein the at least one gas outlet opening of the gas distributor is communicatingly connected to at least one gas inlet opening of the reactor, and/or wherein the at least one gas inlet opening of the gas distributor is communicatingly connected to at least one gas feed line of the media supply of the reactor.

2. Gas distributor according to Claim 1, which is suitable for introducing gas into the reactor, wherein the at least one gas inlet opening is provided for the feeding of gas and is connected to a gas feed line, wherein the at least one gas outlet opening serves for feeding gas to reactor nozzles.

3. Gas distributor according to Claim 1, or according to Claim 2, wherein the detachable fastening means are flange connections.

4. Gas distributor according to any one of Claims 1 to 3, whose feed lines from the gas distributor to the nozzles have an identical shape, preferably run vertically.

5. Gas distributor according to any one of Claims 1 to 4, which is of a ring type.

6. Gas distributor in which gases can be transported, comprising at least two segments which are gastightly connected to one another by means of detachable fastening means, at least one gas inlet opening and at least one gas outlet opening, wherein the gas distributor can be mounted by means of detachable fastening means to a reactor for deposition of polycrystalline silicon, wherein the at least one gas inlet opening of the gas distributor is provided for the feeding of off-gas from the reactor and is connected to at least one off-gas opening of the reactor, wherein the at least one gas outlet opening of the gas distributor serves for removing the off-gas from the gas distributor.

7. Gas distributor according to Claim 6, wherein the detachable fastening means are flange connections.

8. Gas distributor according to any one of Claims 6 and 7, wherein the connection lines from the off-gas openings of the reactor to the gas distributor have an identical shape.

9. Gas distributor according to any one of Claims 6 to 8, which is of a ring type.

10. Reactor for deposition of polycrystalline silicon containing at least one gas distributor according to any one of Claims 1 to 5.

11. Reactor for deposition of polycrystalline silicon containing at least one gas distributor according to any one of Claims 6 to 9.

12. Reactor for deposition of polycrystalline silicon containing at least one gas distributor according to any one of Claims 1 to 5, and at least one gas distributor according to any one of Claims 6 to 9.

## Revendications

1. Répartiteur de gaz, dans lequel des gaz peuvent être transportés, comprenant au moins deux segments, qui sont assemblés l'un à l'autre de façon étanche au gaz au moyen de moyens de fixation séparables, au moins une ouverture d'entrée de gaz et au moins une ouverture de sortie de gaz, dans lequel le répartiteur de gaz peut être monté au moyen de moyens de fixation séparables sur un réacteur destiné à la séparation de silicium polycristallin, dans lequel ladite au moins une ouverture de sortie de gaz du répartiteur de gaz est raccordée en communication à au moins une ouverture d'entrée de gaz du réacteur et/ou dans lequel ladite au moins une ouverture d'entrée de gaz du répartiteur de gaz est raccordée en communication à au moins une conduite de fourniture de gaz de l'alimentation en fluide du réacteur.

2. Répartiteur de gaz selon la revendication 1, qui est apte à introduire du gaz dans le réacteur, dans lequel ladite au moins une ouverture d'entrée de gaz est prévue pour la fourniture de gaz et est raccordée à une conduite de fourniture de gaz, dans lequel ladite au moins une ouverture de sortie de gaz sert pour l'amenée de gaz à des buses du réacteur.

3. Répartiteur de gaz selon la revendication 1 ou la revendication 2, dans lequel les moyens de fixation séparables sont des assemblages à brides.

4. Répartiteur de gaz selon l'une quelconque des revendications 1 à 3, dont les conduites d'arrivée du répartiteur de gaz aux buses ont une forme identique, et s'étendent en particulier verticalement.

5. Répartiteur de gaz selon l'une quelconque des revendications 1 à 4, qui est de forme annulaire.

6. Répartiteur de gaz, dans lequel des gaz peuvent être transportés, comprenant au moins deux segments, qui sont assemblés l'un à l'autre de façon étanche au gaz au moyen de moyens de fixation séparables, au moins une ouverture d'entrée de gaz et au moins une ouverture de sortie de gaz, dans lequel le répartiteur de gaz peut être monté au moyen de moyens de fixation séparables sur un réacteur destiné à la séparation de silicium polycristallin, dans lequel ladite au moins une ouverture d'entrée de gaz du répartiteur de gaz est prévue pour la fourniture de gaz d'échappement provenant du réacteur et est raccordée à au moins une ouverture de gaz d'échappement du réacteur, dans lequel ladite au moins une ouverture de sortie de gaz du répartiteur de gaz sert pour l'évacuation des gaz d'échappement hors du répartiteur de gaz.

7. Répartiteur de gaz selon la revendication 6, dans lequel les moyens de fixation séparables sont des assemblages à brides.

8. Répartiteur de gaz selon une des revendications 6 ou 7, dans lequel les conduites de raccordement des ouvertures de gaz d'échappement du réacteur au répartiteur de gaz ont une forme identique.

9. Répartiteur de gaz selon l'une quelconque des revendications 6 à 8, qui est de forme annulaire.

10. Réacteur destiné à la séparation de silicium polycristallin, comportant au moins un répartiteur de gaz selon l'une quelconque des revendications 1 à 5.

11. Réacteur destiné à la séparation de silicium polycristallin, comportant au moins un répartiteur de gaz selon l'une quelconque des revendications 6 à 9.

12. Réacteur destiné à la séparation de silicium polycristallin, comportant au moins un répartiteur de gaz selon l'une quelconque des revendications 1 à 5 ainsi qu'au moins un répartiteur de gaz selon l'une quelconque des revendications 6 à 9.
